# FASCICULE DE BREVET EUROPEEN

(11) **EP 0 854 161 B1**
(45) Date de publication et mention de la délivrance du brevet: **13.10.2004**
(21) Numéro de dépôt: 98400066.1
(22) Date de dépôt: 15.01.1998
(51) Int. Cl.: C08G 69/26, B32B 27/34, C08L 77/00, C08L 77/06

(54) **Matériau barrière résistant à l'humidité et à la transformation par étirage et/ou thermoformage**
Sperrmaterial beständig gegen Feuchte, Streck- und/oder Thermo-Formung
Barrier material resisting to humidity and to transformation by stretching and/or thermomoulding

(30) Priorité: 20.01.1997 FR 9700523
(43) Date de publication de la demande: 22.07.1998
(73) Titulaire: Atofina, 92800 Puteaux (FR)
(72) Inventeur: Werth, Michael, 27300 Bernay (FR)

(56) Documents cités:
- EP-A- 0 159 310
- EP-A- 0 318 964
- EP-A- 0 358 038
- WO-A-93/01108
- DE-A- 3 200 428
- US-A- 4 603 166

## Description

La présente invention concerne le domaine des matériaux polymères barrière aux gaz et aux liquides et plus particulièrement de matériaux transparents, résistants à l'eau et susceptibles d'être mis en forme de films ou de couches minces mono- ou multimatière.

Dans la littérature, sont décrits de nombreux matériaux barrière et notamment les résines polyamides amorphes. Ainsi, EP 411.601 a pour objet des films multicouches pour réservoirs d'essence dont une couche est constituée de copolyamide amorphe 6,I/6,T. Mais ces résines polyamides amorphes nécessitent des températures de transformation élevées, par exemple au cours du thermoformage de l'article fini, et lorsque l'article fini contenant ces résines polyamides amorphes est biorienté, ses propriétés barrière sont fortement diminuées.

Pour remédier à cet inconvénient, on a alors proposé d'associer les résines polyamides amorphes avec d'autres résines telles que des polyamides cristallins.

EP 287.839 a pour objet des films multicouches dont une couche comprend un mélange de polyamide cristallin et de polyamide amorphe (PA-6,I/6,T).

. EP 366.382 décrit une composition pour bouteille soufflée ou moulée consistant en un mélange de PA-6, PA-6,6, de PA amorphe et d'une charge lamellaire et WO 93/01108 décrit un récipient alimentaire consistant en un mélange de PA-6,6 de plusieurs PA amorphes, d'une charge lamellaire et d'une résine ionomère.

Ces solutions techniques présentent l'inconvénient de nécessiter une étape supplémentaire à savoir le mélangeage de résines, plus ou moins compatibles, nécessitant parfois l'ajout d'un agent de compatibilisation.

Un autre matériau barrière très largement répandu est constitué par la famille des copolymères d'éthylène et d'alcool vinylique (EVOH). Mais l'EVOH, outre son prix élevé, présente une faible résistance à l'humidité, ce qui empêche son utilisation pour la réalisation d'articles monomatière et lorsqu'il est utilisé pour des articles composites, oblige à ajouter au moins une couche intermédiaire entre l'EVOH et le milieu humide pour empêcher le contact direct EVOH/milieu humide. De plus, lorsqu'on réalise des films ou récipients multicouches avec une couche barrière en EVOH selon un procédé de thermoformage en phase solide, on constate que l'EVOH ne peut être formé aux températures relativement basses requises pour le thermoformage des autres résines de la structure multicouche sans rupture de la couche d'EVOH, aboutissant à une perte des propriétés globales en tant que barrière. Pour limiter ces inconvénients, on peut également associer l'EVOH avec d'autres résines. Ainsi, EP 305.146 a pour objet des mélanges d'EVOH (majoritaire) et de polyamide amorphe pour fabriquer des récipients multicouches obtenus par thermoformage.

Cependant, aucune des références citées ci-dessus ne propose un matériau à la fois suffisamment barrière pour être utilisé seul et susceptible d'être mis en oeuvre facilement et transformé, notamment selon des techniques d'étirage, thermoformage, sans diminution de ses propriétés barrière.

L'invention, objet de la présente demande concerne un matériau barrière qui satisfait ces critères et permet donc de s'affranchir d'un mélange de résines pour la réalisation d'une (mono)couche barrière aux liquides et aux gaz. Ce matériau présente en sus une bonne adhérence à de nombreuses résines et possède une bonne transparence, ce qui est un avantage pour la réalisation d'objets destinés à l'emballage, notamment alimentaire.

Le matériau barrière selon l'invention comprend au moins un copolyamide essentiellement constitué de motifs dérivés d'hexaméthylène diamine, d'acides iso- et téréphtaliques et éventuellement d'acide adipique qui présente un taux de cristallinité (χ_{c}) d'au moins 5 % et de préférence d'au moins 8 % mesuré par diffraction X dans le domaine des grands angles à l'aide d'un réfractomètre de type théta-théta (cf Nylon Plastics Handbook M.I. Kohan Hanser Publishers; 1995; 4.6.2 Crystallinity, p 98-100).

Le matériau barrière selon l'invention contient au moins un terpolyamide PA-6,I/6,T/6,6 ou un copolyamide PA-6,I/6,T -désigné ci-après par polyamide selon l'invention- comorenant, pour 100 moles de copolyamide :
de 46 à 62 moles de PA-6,I,
de 30 à 42 moles de PA-6,T,
et de 6 à 12 moles de PA-6,6.

Le polyamide selon l'invention peut en outre contenir jusqu'à 5 % en poids d'autres monomères de polyamide tels que un ou plusieurs diacides carboxyliques et/ou diamines et/ou aminoacides et/ou lactames parmi lesquels on peut notamment citer le 1,4-diamino cyclohexane, le caprolactame, le dodécalactame, l'octaméthylène diamine, la décaméthylène diamine, la dodécaméthylène diamine, le 1,5-diaminohexane, le 2,2,4-triméthyl 1,6-diamino hexane, la pipérazine, le 3,3'-diméthyl-4,4'diamino-dicyclohexylméthane, le 4,4'-diamino-dicyclohexylméthane, le 2,2'-(4,4'diamino-dicyclohexylméthane)propane, l'isophoronediamine, les acides azélaïque, sébacique, dodécanedioïque.

De préférence, son taux de di(6-amino-hexyl)amine, triamine issue de la dimérisation éventuelle de l'hexaméthylène diamine mesuré par RMN du proton est inférieur à 1,5 % molaire.

La viscosité inhérente des polyamides selon l'invention mesurée à 25 °C dans une solution à 0,5 g/dl de polymère dans le métacrésol est comprise entre 0,75 et 1,3 et de préférence entre 0,85 et 1,05.

Le polyamide selon l'invention peut être polymérisé selon un procédé similaire à celui mis en oeuvre pour la synthèse du PA-6,6 de manière continue ou discontinue.

Les monomères (hexaméthylène diamine, acides iso- et téréphtaliques et éventuellement acide adipique) sont chargés dans un réacteur de préférence sous forme solution aqueuse saline contenant en général de 20 à 40 % en poids d'eau, au moins l'un des monomères étant introduit dans le mélange réactionnel en léger excès par rapport à la proportion visée dans le copolymère final. Le mélange réactionnel est ensuite chauffé à une température comprise entre 200 et 240 °C, et de préférence voisine de 220 °C, sous pression autogène. La pression au sein du réacteur atteint en général 1,5 à 2,5 MPa et on maintient la température en agitant le mélange réactionnel pendant une trentaine de minutes.

On évapore ensuite l'eau présente dans le milieu réactionnel en limitant l'apparition de mousse en surface et en évitant une chute trop brutale de la pression. La durée de cette opération est en général comprise entre 1 heure 30 et 3 heures 30, de préférence voisine de 2 heures, la température étant de préférence maintenue à 240 °C. Lorsque le réacteur est revenu à la pression atmosphérique, on continue la polymérisation soit sous pression réduite soit sous courant d'azote pendant une durée en général comprise entre un vingtaine de minutes et 1 heure 30. On récupère le polymère par exemple sous forme de granulés extrudés à une température comprise entre 250 et 300 °C.

La demanderesse a constaté que le taux de cristallinité du polyamide selon l'invention dépend de son passé thermique. Ainsi, le taux de cristallinité du polyamide tel que polymérisé et extrudé va croître lorsque ledit polyamide sera chauffé à une température comprise entre à sa température de transition vitreuse et sa température maximale de fusion. De même, un cisaillement et/ou un étirage mis en oeuvre dans cette gamme de températures ont pour effet d'augmenter le taux de cristallinité du polyamide selon l'invention ainsi que ses propriétés barrière.

La demanderesse a également noté que certains produits, notamment l'eau, lorsqu'ils sont en contact avec le polyamide selon l'invention, abaissent sa température de transition vitreuse ; lors de tout traitement thermique, il sera important de tenir compte de ce phénomène.

Outre le(s) copolyamide(s) et/ou le(s) terpolyamide(s) décrits plus haut, le matériau barrière selon l'invention peut contenir divers additifs et/ou modifiants parmi lesquels on peut citer :
- les colorants et pigments, tels que le dioxyde de titane, le noir de carbone, l'oxyde de cobalt, les oxydes de fer, le titanate de nickel, des pigments organiques comme les dérivés de phtalocyanine et d'anthraquinone,
- les azurants optiques tels que les dérivés de thiophène,
- les antioxydants tels que l'iodure de cuivre combiné avec l'iodure de potassium, les dérivés de phénols ou d'amines encombrés,
- les stabilisateurs UV tels que les dérivés de résorcine, les benzotriazoles, des salicylates,
- les limitateurs de chaîne tels que les acides monocarboxyliques ou les monoamines,
- les charges de renforcement telles que la wollastonite, les billes de verre, le talc, le mica, les fibres de verre, de carbone, de nitrure de bore, le carbonate de calcium et/ou de magnésium.

La présente invention a également pour objet l'utilisation du matériau barrière décrit plus haut à base d'au moins un polyamide selon l'invention pour la réalisation de matériaux composites comprenant de préférence une ou plusieurs couches minces, feuilles et/ou films, tubes, corps creux.

Ces matériaux peuvent être mis en oeuvre selon les techniques habituellement mises en oeuvre pour les résines thermoplastiques.

A titre d'exemple de matériaux multicouches, on citera tout particulièrement ceux associant :
a) au moins une couche à base du matériau barrière selon l'invention,
b) au moins une couche à base de polyoléfine et/ou de polyester et/ou de polymère acrylique et/ou de polycarbonate,
c) et au moins une couche de liant d'adhésion entre les couches a) et b), par exemple à base de polyoléfine greffée ou copolymérisée avec des molécules polaires et réactives,
   et éventuellement une ou plusieurs autres couches telles que :
d) au moins une couche à base d'autres matériaux barrière, par exemple à base d'EVOH,
e) au moins une couche à base de polyamide amorphe et/ou de polyamide semi-cristallin, tel que le PA-6,
la couche comprenant le matériau barrière selon l'invention pouvant être placée en surface ou prise en sandwich entre d'autres couches.

Le matériau barrière selon l'invention peut être utilisé pour la fabrication de corps creux qui peuvent être obtenus soit selon une technique d'extrusion-soufflage, soit par biorientation de préformes préparées par injection. Ces corps creux peuvent être des flacons, de bouteilles destinés à l'emballage de produits chimiques, de produits alimentaires, de produits pharmaceutiques et/ou cosmétiques.

Les corps creux préparés par extrusion-soufflage, outre une couche à base du matériau barrière selon l'invention, comprennent avantageusement une couche à base de polyoléfine, par exemple PE ou PP, éventuellement une couche d'EVOH, le contact entre les différentes couches étant de préférence assuré par un liant de coextrusion. A titre d'exemple de structures multicouches, on peut citer les associations suivantes :
- PEhd/liant/EVOH/liant/matériau barrière selon l'invention,
- PE/liant/matériau barrière selon l'invention/liant/PE,
- PEhd/liant/matériau barrière selon l'invention
où le matériau barrière selon l'invention, s'il est en surface de la structure, est de préférence en contact avec le contenu du corps creux.

Lorsqu'une technologie d'injection de préformes est mise en oeuvre, il est possible de biorienter les préformes en les chauffant à une température proche (mais supérieure) de la transition vitreuse du matériau qui les constitue, ici le matériau barrière selon l'invention, puis à les étirer selon leur axe principal et à l'aide d'un poinçon, perpendiculairement audit axe. Cette technique présente l'avantage d'améliorer les propriétés barrière du matériau selon l'invention.

On peut également injecter des préformes multicouches par coinjection de manière à obtenir des préformes de type coeur-peau. Parmi les préformes multicouches, on citera tout particulièrement celles qui comprennent un coeur de faible épaisseur en matériau barrière selon l'invention et une peau plus épaisse en polyéthylène téréphtalate (PET). Il est possible de réaliser des préformes multicouches encore plus complexes constituées typiquement de 4 ou 5 couches selon l'enseignement de US 5.143.733. A titre d'exemple de structures 5 couches, on peut citer l'association PET/matériau selon l'invention/PET/matériau selon l'invention/PET.

Le matériau barrière est également apte à la transformation en films mono- et multicouches, selon les techniques d'extrusion de gaine ou en filière plate, avec trempe éventuelle sur cylindre froid, particulièrement préférée pour obtenir des films parfaitement transparents.

Pour la réalisation de films multicouches, il est possible d'associer le matériau selon l'invention avec des polyoléfines et/ou de l'EVOH et/ou d'autres matériaux barrière tels que ceux décrits précédemment. Ces films mono- et multicouches peuvent être biorientés (ce qui a pour effet d'améliorer leurs propriétés barrière). La biorientation peut être pratiquée à plat ou en gaine double bulle.

Les matériaux barrière peuvent également être mis en forme de tubes mono- et/ou multicouches par extrusion, par exemple à travers une filière annulaire, suivie d'un calibrage sous vide ; à titre d'exemple de tubes multicouches, on citera tout particulièrement ceux comprenant, outre une couche de matériau selon l'invention, au moins une couche à base de polyoléfine, de préférence à base de PE, dont l'adhésion entre la polyoléfine et le matériau selon l'invention est assurée au moyen d'un liant selon les associations :
- PE/liant/matériau selon l'invention,
- PE/liant/matériau selon l'invention/liant/PE.

De tels tubes sont particulièrement adaptés pour le transport d'hydrocarbures.

Le matériau barrière selon l'invention peut également être utilisé en mélange avec d'autres résines et notamment d'autres résines PA parmi lesquelles on peut citer les PA aliphatiques telles que le PA-6 et/ou le PA-6,6, les PA amorphes, les PA de type phtalamide, etc. Dans le cas des mélanges du matériau barrière selon l'invention avec le PA-6 et/ou PA-6,6, lorsque le(s) PA aliphatique(s) est(sont) majoritaire(s), la présence du matériau barrière améliore très sensiblement l'aptitude à la biorientation du ou des PA aliphatique(s), diminue sa reprise à l'humidité, améliore son aptitude à la transformation, par exemple par extrusion (processing-aid) ainsi que sa transparence.

Dans le cas des mélanges du matériau barrière avec le PA-6 et/ou PA-6,6 pour lesquels le matériau barrière est majoritaire, la présence du ou des PA aliphatique(s) améliore l'aptitude à la biorientation des films mono-couche en matériau barrière et modifie leur rigidité.

### Exemples 1 à 6 Synthèse de polyamide selon l'invention

### Exemple 1

Les monomères (hexaméthylène diamine, acides iso- et téréphtaliques et acide adipique) sont chargés dans un autoclave de 980 I en acier inoxydable muni d'une agitation à ancre sous forme de solution aqueuse saline, l'acide adipique étant introduit dans le mélange réactionnel en léger excès par rapport à la proportion visée dans le copolymère final. Les proportions des ingrédients sont les suivantes :

| | |
|---|---|
| hexaméthylène diamine | 133,0 kg |
| acide adipique | 16,8 kg |
| acide isophtalique | 87,0 kg |
| acide téréphtalique | 58,0 kg |
| eau déminéralisée | 80 kg. |

Le mélange réactionnel est purgé 5 fois à l'azote en alternant la pression du réacteur entre la pression atmosphérique et 800 kPa puis chauffé à 220 °C, sous pression autogène. La pression au sein du réacteur atteint 2,3 MPa et on maintient la température en agitant le mélange réactionnel pendant 30 min, la vitesse d'agitation étant de l'ordre de 40 tr/min.

On évapore ensuite lentement l'eau présente dans le milieu réactionnel en limitant l'apparition de mousse en surface et en évitant une chute trop brutale de la pression. La durée de cette opération est de 2h30, la température étant légèrement augmentée jusqu'à 240 °C. On ramène ensuite le contenu du réacteur à la pression atmosphérique et on continue la polymérisation en chauffant le milieu réactionnel à 270 °C sous courant d'azote pendant environ 1h et en diminuant l'agitation à 15 tr/min.

Le polymère fondu ainsi obtenu est alors extrudé par la vanne de fond du réacteur, une légère surpression d'azote étant établie au sein du réacteur et la température est de 270 °C.

On procède ensuite au séchage du polymère pendant 6 h à 60 °C puis 6 h à 80 °C.

Sa composition molaire est la suivante :

| | |
|---|---|
| PA-6,I | 0,54 |
| PA-6,T | 0,36 |
| PA-6,6 | 0,115 |

Sa viscosité inhérente est comprise dans la gamme de 0,85 à 1,05 g/dl.

Un film d'épaisseur 50 mm extrudé sur une filière à plat à l'aide du polymère ci-dessus a un taux de cristallinité χ_{c} de 9 %.

### Exemples 2 à 6

Selon le mode opératoire de l'exemple 1, on prépare des terpolyamides ayant des compositions molaires différentes indiquées dans le tableau 1 et dont le taux de di(6-amino-hexyl)amine mesuré par RMN du proton est strictement inférieur à 1,5 %.

Par calorimétrie à balayage différentiel (DSC), on détermine la température de transition vitreuse Tv, le pic de fusion Tf ainsi que la plage de fusion des différentes résines, les résultats sont réunis dans le tableau 1.

**Tableau 1**

| Exemple | composition molaire PA-6,I/6,T/6,6 | Tg °C | pic Tf °C | plage de fusion °C |
|---|---|---|---|---|
| 2 | 0,54 / 0,40 / 0,06 | 122 | 236 | 200-277 |
| 3 | 0,58 / 0,36 / 0,06 | 121 | 249 | 219-262 |
| 4 | 0,52 / 0,38 / 0,10 | 116 | 246 | 201-276 |
| 5 | 0,54 / 0,34 / 0,12 | 115 | 240 | 200-250 |
| 6 | 0,534 / 0,356 / 0,117 | 117 | 234 | 195-275 |

### Exemples 7 à 13 Utilisation de polyamides selon l'invention comme matériaux barrière

### Exemples 7 à 9 Films monocouches

La résine de l'exemple 1 a été extrudée sous forme de feuille mince coulée monomatière dont l'épaisseur est comprise entre 20 et 60 µm (exemple 7). Le film obtenu est parfaitement transparent, brillant, sans défaut apparent dû à des gels et/ou des infondus.

Une portion du film ci-dessus est recuite (exemple 8) i-e stockée pendant 12 h à 80 °C dans une enceinte fermée dont l'humidité relative est égale à 100 %. Le taux de cristallinité du film recuit χ_{c} est égal à 14 %.

A titre de comparaison, on extrude un film de même épaisseur constitué d'un polyamide amorphe PA-6,I/6,T (i-e ne présentant pas de pic de fusion cristalline endotherme par DSC, la mesure étant effectuée selon la norme ASTM D 3417 et Xc = 0%) le rapport molaire des motifs dérivés d'acide isophtalique aux motifs dérivés d'acide téréphtalique étant de 70/30 (exemple 9). Cette résine est commercialisée par Du Pont de Nemours sous la dénomination SELAR® PA.

A l'aide d'un appareil OXTRAN, on mesure la perméabilité à l'oxygène (pO₂) des 3 films décrits plus haut dans une enceinte d'humidité relative (HR) nulle puis dans une enceinte dont l'humidité relative est égale à 75 % ainsi que la perméabilité à l'essence oxygénée ou non. Les résultats de perméabilité à l'oxygène exprimés en cm3*20µm/m2*24h*atm et en g*20µm/m2*24h*atm pour la perméabilité à l'essence sont réunis dans le tableau 2.

**Tableau 2**

| exemple | composition molaire en PA-6,I/6,T/6,6 | pO₂ à 0 % HR | pO₂ à 75 % HR | essence C | essence TF1 |
|---|---|---|---|---|---|
| 7 | 0,54 / 0,36 / 0,11 | 60 | 26 | 2 | 35 |
| 8 | 0,54 / 0,36 / 0,11 | 49 | 7-8 | 2 | 40 |
| 9 | 0,70 / 0,30 / 0,00 | 50 | 25 | 5 | 48 |

essence C : mélange équivolumique de toluène et d'isooctane
essence TF1 : de 10 % en volume d'éthanol et de 90 % d'essence C

### Exemples 10 à 13 Films multicouches

A l'aide d'une extrudeuse-souffleuse BEKUM®, on extrude des films tricouches et cinq couches dont une des couches est constituée de la résine de l'exemple 1, de SELAR® PA ou d'EVOH contenant 29 % en moles d'éthylène et de degré de saponification supérieur à 99 %, la ou les couches adjacentes étant un liant à base de copolymère d'éthylène greffé avec de l'anhydride maléique et commercialisé par la demanderesse sous la dénomination OREVAC® 18032, étant elle-même éventuellement en contact avec une couche de PEhd d'indice de fluidité à l'état fondu mesuré à 190 °C sous une charge de 2,16 kg selon la norme ISO 1133 est égal à 0,3 et de densité mesurée selon la norme ISO 1133 égale à 0,953. Les structures et épaisseurs des films sont indiquées dans le tableau 3. On mesure leur perméabilité à l'oxygène dans une enceinte maintenue à 100 % d'humidité relative. Les résultats sont réunis dans le tableau 3.

**Tableau 3**

| exemple | structure du film & épaisseur (µm) | pO₂ à 100 % HR |
|---|---|---|
| 10 | PEhd / liant / SELAR PA 356/44/64 | 0,096 |
| 11 | PEhd / liant / PA exemple 1 318/76/44 | 0,065 |
| 12 | PEhd / liant / PA exemple 1 406 / 64 / 51 | 0,057 |
| 13 | PEhd / liant / EVOH / liant / PEhd 305/25/44/25/102 | 0,101 |

## Revendications

1. Polyamide **caractérisé en ce qu'**il comprend pour 100 moles de monomères :
de 46 à 62 moles de PA-6,I,
de 30 à 42 moles de PA-6,T,
et de 6 à 12 moles de PA-6,6.
el **en ce qu'**il présente un taux de cristallinité (χ_{c}) d'au moins 5 %, et de préférence d'au moins 8 %, mesuré par diffraction X dans le domaine des grands angles.

2. Utilisation d'au moins un polyamide tel que défini à la revendication 1 pour la réalisation d'un matériau barrière aux gaz et aux liquides et résistant à l'humidité.

3. Article monocouche, feuilles et/ou films, tubes corps creux mettant en oeuvre le matériau barrière de la revendication 2.

4. Article composite sous forme de feuille et/ou film, tube corps creux mettant en oeuvre au moins un matériau barrière, tel que défini à la revendication 2.

5. Procédé de fabrication d'articles tels que définis aux revendications 3 ou 4, **caractérisé en ce qu'**au moins une étape du procédé est mise en oeuvre à une température comprise entre la température de transition vitreuse du polyamide de la revendication 1 et sa température maximale de fusion.

6. Utilisation d'articles tels que définis aux revendications 3 et 4 pour l'emballage de produits chimiques, de produits alimentaires, de produits pharmaceutiques et/ou cosmétiques.

## Patentansprüche

1. Polyamid, **dadurch gekennzeichnet, dass** es pro 100 mol Monomeren enthält:
46 bis 62 mol PA-6,I,
30 bis 42 mol PA-6,T und
6 bis 12 mol PA-6,6,
und dadurch, dass es einen Kristallinitätsgrad (χ_{c}) von mindestens 5% und vorzugsweise von mindestens 8% aufweist, gemessen mittels Röntgenbeugung im Bereich der großen Winkel.

2. Verwendung mindestens eines Polyamids nach Anspruch 1 zur Herstellung eines feuchtigkeitsbeständigen Sperrmaterials für Gas und Flüssigkeiten.

3. Einschichtiger Gegenstand, Folien und/oder Filme, Hohlkörperröhren, welche das Sperrmaterial nach Anspruch 2 verwenden.

4. Verbundgegenstand in Form von Folie und/oder Film, einer Hohlkörperröhre, welcher mindestens ein Sperrmaterial nach Anspruch 2 verwendt.

5. Verfahren zur Herstellung von Gegenständen nach den Ansprüchen 3 oder 4, **dadurch gekennzeichnet, dass** mindestens ein Schritt des Verfahrens bei einer Temperatur zwischen der Glasübergangstemperatur des Polyamids nach Anspruch 1 und seiner maximalen Schmelztemperatur durchgeführt wird.

6. Verwendung von Gegenständen nach den Ansprüchen 3 und 4 zur Verpackung von chemischen Produkten, Nahrungsprodukten, pharmazeutischen und/oder kosmetischen Produkten.

## Claims

1. Polyamide, **characterized in that** it comprises, per 100 mol of monomers:
from 46 to 62 mol of PA-6,I,
from 30 to 42 mol of PA-6,T,
and from 6 to 12 mol of PA-6,6,
and **in that** it exhibits a degree of crystallinity (χ_{c)} of at least 5% and preferably of at least 8%, measured by X-ray diffraction in the wide-angle range.

2. Use of at least one polyamide as defined in Claim 1 for the preparation of a material which is a barrier to gases and to liquids and which is resistant to moisture.

3. Single-layer article, sheets and/or films, pipes or hollow bodies employing the barrier material of Claim 2.

4. Composite article in the sheet and/or film, pipe or hollow body form employing at least one barrier material as defined in Claim 2.

5. Process for the manufacture of articles as defined in Claims 3 and 4, **characterized in that** at least one stage of the process is carried out at a temperature between the glass transition temperature of the polyamide of Claim 1 and its maximum melting temperature.

6. Use of articles as defined in Claims 3 and 4 for the packaging of chemicals, foodstuffs or pharmaceutical and/or cosmetic products.
